# EUROPEAN PATENT SPECIFICATION

(11) **EP 3 484 968 B1**
(45) Date of publication and mention of the grant of the patent: **19.08.2020**
(21) Application number: 16801496.7
(22) Date of filing: 25.11.2016
(51) Int. Cl.: C09D 175/04, C09D 133/00, C08L 33/08, C08L 75/04

(54) **AQUEOUS COATING COMPOSITION**
WÄSSRIGE BESCHICHTUNGSZUSAMMENSETZUNG
COMPOSITION DE REVÊTEMENT AQUEUX

(30) Priority: 14.07.2016 EP 16179529
(43) Date of publication of application: 22.05.2019
(73) Proprietor: Akzo Nobel Coatings International B.V., 6824 BM Arnhem (NL)
(72) Inventor: NASIOUDIS, Andreas, 2171 GG Sassenheim (NL); VAN 'T VEER, Tom, 2252 XD Voorschoten (NL); OUDENDIJK, Kjell Jorgen, 2134 BR Hoofddorp (NL)
(74) Representative: Akzo Nobel IP Department
(86) International application number: PCT/EP2016/078877
(87) International publication number: WO 2018/010825

(56) References cited:
- WO-A1-2006/128875
- WO-A2-2005/058993

## Description

### Field of the Invention

The present invention relates to an aqueous coating composition comprising a dispersed acrylate binder polymer, an alkali-soluble acrylic polymer, and a dispersed oxidatively drying resin.

### Background of the Invention

Aqueous coating compositions comprising dispersed resins, such as dispersed acrylate binder polymers, dispersed oxidatively drying resins such as for example alkyds, or combinations thereof, are well-known in the art. Such aqueous compositions with dispersed resins avoid the high volatile organic compounds (VOC) contents of traditional solvent-borne alkyd paints and therewith bring health and sustainability benefits.

In WO00/24837 is for example disclosed an aqueous coating composition comprising as binder a dispersed polyurethane resin with oxidatively drying groups and a dispersed polyurethane-acrylate hybrid.

In WO2006/128875 is disclosed an aqueous composition comprising an emulsified alkyd, an emulsified acrylate and a non-crosslinking alkali-soluble acrylic polymer for the formulation of aqueous paints with solid contents above 60 wt% that show improved application characteristics such as open time, flow at brush or roller application, and substrate wetting, compared to acrylate or alkyd/acrylate based aqueous paints without alkali-soluble acrylic polymer.

There is a need in the art for aqueous coating compositions, in particular aqueous coating compositions comprising a substantial amount of inorganic solid particles - i.e. inorganic color or white pigments and/or inorganic non-opacifying extenders - such as opacifying paints, that have improved brush or roller application properties, in particular open time and leveling, not only at high solid contents, but also at moderate solid contents, whilst resulting in a dried coating of sufficient hardness.

### Summary of the Invention

It has now been found that the use of a dispersed acrylate binder polymer in combination with an alkali-soluble acrylic polymer and a dispersed oxidatively drying resin, in an aqueous coating composition with a content of inorganic solid particles of at least 8 wt%, such as an opacifying paint, results in further improved brush and roller application properties of the coating composition at a solid content of the coating composition in the range of from 28 to 55 wt%, if the content of any oxidatively drying resin is lower than the content of the alkali-soluble acrylic polymer and the content of the acrylate binder polymer is higher than the content of the alkali-soluble acrylic polymer. It has, moreover, been found that such coating compositions yield dried coatings with acceptable hardness properties and acceptable water-resistance.

Accordingly, the present invention provides an aqueous coating composition comprising a dispersed acrylate binder polymer, an alkali-soluble acrylic polymer with a weight averaged molecular weight of at most 200,000 g/mole and an acid value in the range of from 20 to 150 mg KOH/g polymer, and a dispersed oxidatively drying resin, wherein the weight content of the oxidatively drying resin, is lower than the weight content of the alkali-soluble acrylic polymer and wherein the weight content of the acrylate binder polymer is higher than the weight content of the alkali-soluble acrylic polymer, wherein the solid content of the coating composition is in the range of from 28 to 55 wt %, and the content of inorganic solid particles is in the range of from 8 to 40 wt %, based on the total weight of the coating composition.

### Detailed Description of the Invention

The aqueous coating composition according to the invention comprises a dispersed acrylate binder polymer, i.e. a film-forming acrylate polymer that typically has a weight-averaged molecular weight of at least 300,000 g/mole, usually at least 500,000 g/mole or even at least 1,000,000 g/mole, and an alkali-soluble acrylic polymer with a weight-averaged molecular weight of at most 200,000 g/mole. Reference herein to weight-averaged molecular weight of a polymer is to the weight-averaged molecular weight as determined according to ISO 16014.

The composition further comprises a dispersed oxidatively drying resin. The coating composition may comprise further binder polymers. Preferably, the coating composition is free of binder polymers other than the acrylate binder polymer, the alkali-soluble acrylic polymer, and the oxidatively drying resin.

The dispersed acrylate binder polymer may be any acrylate binder polymer suitable to be used as film-forming polymer in aqueous coating compositions such as paints. Such acrylate binder polymers are well-known in the art and are often referred to as emulsified latex binders. The acrylate binder polymer may be a purely acrylic polymer, i.e. only comprising acrylic monomers such as (meth)acrylic acid or esters of (meth)acrylic acid, or a copolymer of vinylic and acrylic monomers or a copolymer of styrenic and acrylic monomers. Suitable commercially available examples of dispersed purely acrylic or styrene/acrylic acrylate binder polymers include Primal AC-2508 ex. Dow Chemical, NeoCryl XK-98 ex. DSM Coating Resins, Alberdingk® AC 3600 ex. Alberdingk Boley.

The acrylate binder polymer preferably is a urethane-acrylate hybrid binder polymer. Such polymer is a hybrid of a polyacrylate and a polyurethane. Such hybrids may for example be formed by subjecting one or more acrylic monomers to free radical polymerisation conditions in the presence of a dispersion of an already chain-extended polyurethane resin using conventional techniques. This may for example be done by adding free radical initiators to a mixture of polyurethane dispersion and acrylic monomer or, alternatively, by gradually adding acrylic monomer to a polyurethane dispersion containing initiator. In another variant of the preparation of such urethane-acrylate hybrid binder polymer a solution of isocyanate-terminated urethane-prepolymer in acrylic monomer is formed. The solution is then emulsified in an aqueous medium and the isocyanate-terminated prepolymer is chain extended. Subsequently, either acrylic monomer can be added and the polymerisation thereof initiated or the polymerisation of the acrylic monomer can be initiated and further acrylic monomer can be added during polymerisation. Suitable examples of commercially available dispersions of urethane-acrylate hybrid binder polymer include NeoPac E-125 ex. DSM, Hybridur® 570 Dispersion ex. Air Products, and Hybridur® 540 Dispersion ex. Air Products.

The acrylate binder polymer may be provided with cross-linkable functionality, such as for example carbonyl functionality which is cross-linkable by hydrazines or carbonyl reactive polyamines. Such cross-linkable acrylate binder polymers with carbonyl functionality are for example described in WO00/56827 and in WO2006/128875. The carbonyl functional acrylate polymer may bear amine and hydrazine functional groups in additional to the carbonyl groups such that the acrylate polymers are self-crosslinkable. Alternatively, separate polyamines or hydrazines are present in the coating composition to cross-link the carbonyl functional acrylate polymer, typically in a concentration in the range of from 0.02 to 1.6 moles, preferably 0.05 to 0.9 moles of amine or hydrazine groups per mole of carbonyl functional group. Suitable polyamines and hydrazines are known in the art and for example described in WO2006/128875.

The acrylate binder polymer typically has a weight average molecular weight of at least 300,000 g/mole, preferably of at least 350,000 g/mole, more preferably at least 500,000 g/mole, even more preferably at least 1,000,000 g/mole. The weight average molecular weight is preferably at most 10,000,000 g/mole.

The coating composition further comprises an alkali-soluble acrylic polymer. Reference herein to alkali-soluble acrylic polymers is to acrylic polymers of which at least 50%, preferably at least 75% is dissolved in an alkaline aqueous composition having a pH in the range of from 7.5 to 9.0. Such polymers are known in the art and are typically used in inks or as grinding aid in pigment grinding. Suitable examples of commercially available alkali-soluble acrylic polymers are NeoCryl® BT-24, NeoCryl® BT-20, NeoCryl® BT-100 ex. DSM, and Rhoplex™ I-1955 ex. The Dow Chemical Company.

Alkali-soluble acrylic polymers typically have a weight averaged molecular weight below 200,000 g/mole. Preferably, the non-crosslinking alkali-soluble acrylic polymer has a weight averaged molecular weight in the range of from 8,000 to 100,000 g/mole, more preferably of from 10,000 to 60,000 g/mole, even more preferably of from 15,000 to 50,000 g/mole.

The alkali-soluble acrylic polymer preferably has a relatively high acid value to provide for carboxylic groups that form anionic groups in an alkaline environment. Therefore, the alkali-soluble acrylic polymer has an acid value of at least 20 mg KOH/g polymer. The acid value may be as high as 150 mg KOH/g polymer. To avoid low water resistance of the dried coating, the acid value is preferably at most 100 mg KOH/g polymer, more preferably at most 80 mg KOH/g polymer. The acid value is preferably in the range of from 30 to 100 mg KOH/g polymer, more preferably in the range of from 40 to 80 mg KOH/g polymer, even more preferably in the range of from 55 to 75 mg KOH/g polymer. Acid value can be determined by titration methods well known in the art. A suitable method for determining acid value of polymers is ISO2114.

The alkali-soluble acrylic polymer preferably is non-crosslinking, meaning that they do not form covalent links with the oxidatively drying resin, the acrylate binder polymer and any other binder polymer in the coating composition, if any.

The alkali-soluble acrylic polymer preferably has a glass transition temperature in the range of from 15 °C to 65 °C, more preferably of from 18 °C to 60 °C, even more preferably of from 20 °C to 55 °C. Reference herein to the glass transition temperature is to theoretical glass transition temperature as calculated with the well-known Fox equation (calculated Fox Tg) from the weight fractions of the co-monomers used and Tg values of the homopolymers prepared from the co-monomer. Higher glass transition temperatures will negatively affect the film forming properties at room temperature and therewith brush or roller application properties.

Preferably, the coating composition comprises in the range of from 1 to 10 wt% of the alkali-soluble acrylic polymer, more preferably of from 2 to 8 wt%, even more preferably of from 3 to 7 wt% based on the total weight of the coating composition.

Preferably, the coating composition further comprises a dispersed oxidatively drying resin. The oxidatively drying resin may for example be an alkyd, a fatty acid modified acrylate or a polyurethane resin with oxidatively drying groups. Such oxidatively drying groups are derivatives of unsaturated fatty acids, preferably polyunsaturated fatty acids, preferably those containing 12 to 26 carbon atoms. Preferably, the oxidatively drying resin comprises or is an alkyd or a polyurethane resin with oxidatively drying groups. More preferably the oxidatively drying resin comprises an alkyd or is an alkyd. The alkyd preferably is a urethane modified alkyd, also referred to as PU-modified alkyds.

Dispersed oxidatively drying resins are well-known in the art. Such resins are for example described in US 5,589,535, WO00/24837 and WO2006/128875. Suitable examples of commercially available alkyd dispersions include Uradil AZ554 ex. DSM, and Synaqua 4804 ex. Arkema. A suitable example of a commercially available polyurethane resin with oxidatively drying groups is Urotuf F97 ex. Reichold. Valires HA 040.01 ex. Umicore and Worlee® E150W ex. Worlée are examples of suitable commercially available urethane modified alkyds.

The oxidatively drying resin preferably comprises self-emulsifying groups, such as a carboxyl group or other group capable of anion formation. Such resins are known and are for example disclosed in US 5,589,535.

The weight content of oxidatively drying resin, if present, can be as low as 0.1 wt%. In order to improve water resistance of the dried coating and to improve adhesion of the coating to the substrate, the composition preferably comprises at least 1.0 wt%, more preferably at least 1.5 wt% oxidatively drying resin, based on the total weight of the coating composition. Preferably, the composition comprises at most 6 wt%, more preferably at most 5 wt% oxidatively drying resin, based on the total weight of the coating composition. The amount of oxidatively drying resin based on the total amount of binder polymers in the composition - i.e. the combined content of acrylate binder polymer, alkali-soluble acrylic polymer, oxidatively drying resin and any further binder polymer - is preferably at most 4 wt%.

In the coating composition according to the invention, the weight content of the oxidatively drying resin, if present, is lower than the weight content of alkali-soluble acrylic polymer. The weight content of the acrylate binder polymer is higher than the weight content of the alkali-soluble acrylic polymer. Reference herein to the weight of a polymer is to the dry or solid weight of such polymer.

In the aqueous coating composition the weight content of the acrylate binder polymer is preferably higher than the combined weight contents of the oxidatively drying resin and the alkali-soluble acrylic polymer. The weight ratio of acrylate binder polymer to oxidatively drying resin is preferably at most 10:1, more preferably in the range of from 1.5:1 to 7:1.

The combined contents of acrylate binder polymer, alkali-soluble acrylic polymer, oxidatively drying resin and any further binder polymer in the coating composition is preferably is in the range of from 12 to 30 wt%, more preferably of from 15 to 25 wt%, even more preferably of from 16 to 20 wt%.

The terms resin and binder polymer are used herein interchangeably.

The solid content of the coating composition is in the range of from 28 to 55 wt% based on the total weight of the coating composition, preferably of from 35 to 50 wt%, more preferably of from 40 to 50 wt% based on the total weight of the coating composition. Reference herein to solid content is to total solid content, i.e. the sum of the dry contents of polymers and of other solid ingredients such as color and white pigments, extenders and additives. It has been found that at these moderate solid contents, the coating composition according to the invention, i.e. with contents and ratio for acrylate binder polymer, alkali-soluble acrylic polymer, and oxidatively drying resin as specified hereinabove, has very good application properties, in particular open time. Reference herein to open time is to the time a paint remains "wet" or "open" enough to allow for brush-in and repair.

The aqueous coating composition according to the invention has a content of inorganic solid particles in the range of from 8 to 40 wt %, preferably in the range of from 10 to 35 wt%, more preferably of from 12 to 32 wt%. It is in aqueous coating compositions with a significant amount of inorganic solid particles, such as inorganic color or white pigments, inorganic non-opacifying extender particles or inorganic particulate additives such as matting agents or rheology modifying clays, that brush or roller application properties become critical. Especially in such coating compositions, a combination of dispersed acrylate binder polymer and an alkali-soluble acrylic polymer as specified hereinbefore is favorable.

Inorganic color and white pigments and inorganic non-opacifying extender particles are commonly used in coating compositions and are well-known in the art. Suitable inorganic non-opacifying extender particles include but are not limited to calcium carbonate, calcium sulphate, barium sulphate, silicates, kaolin and other clays and hydrous aluminosilicates, talc and mica, calcium magnesium carbonate, aluminium oxide and aluminium hydroxide.

The coating composition is an aqueous coating composition, meaning that the polymer binders and other ingredients are dispersed or dissolved in a liquid phase having water as the main component. Minor amounts of organic liquids may be present as co-solvents.

If the coating composition comprises an oxidatively drying resin, the coating composition may comprise siccatives or driers to promote curing of the oxidatively drying resin. Such siccatives are well-known in the art and include metal salts of carboxylic acids and metal-ligand complexes. Siccatives are typically used in an amount ranging from 0.001 to 5 wt% of metal based on the weight of the oxidatively drying resin.

The coating composition may further comprise color pigments, inorganic extenders, and additives typically applied in paints, including but not limited to biocides, leveling agents, matting agents, UV stabilizers, dispersants, surfactants, anti-foaming agents, wetting agents, anti-skinning agents, and waxes.

The coating composition preferably comprises a thickening agent. The thickening agent or thickener preferably is an associative organic thickener, more preferably a HEUR-type associative organic thickener (hydrophobically modified ethoxylate urethane thickeners). The thickener is preferably used in an amount of from 1 to 10 wt.%, more preferably of from 2 to 5 wt.% (solid weight of thickener based on the total weight of the coating composition).

The coating composition preferably is a paint composition. The paint composition may be a colored paint composition, i.e. including color pigments, a white paint composition, i.e. including a white pigment such a for example titanium dioxide, or a clear paint composition, i.e. without or with very limited amount of color or white opacifying pigments. Preferably, the paint composition is a colored or white paint composition.

### Examples

The invention is illustrated by means of the following non-limiting examples.

### Test methods

### Open time

The open time of the white paints was determined by applying onto a black Byk-chart a wet paint layer of 100 µm thickness with a bar applicator at climatized conditions of 23°C and 50-55% relative humidity. Immediately after application, nine X-shaped crosses were applied into the paint layer with the wooden end of a disposable brush. After 5.0 minutes, a brush with fresh white paint (from which excess paint had been removed by scraping alongside the edge of a paint can) was moved 10 times up and down in perpendicular direction to the initial drawdown at the location of the first X-shaped cross.

This procedure was repeated for the other X-shaped crosses at one minute intervals (procedure at t = 6.0 minutes for second cross; at t = 7.0 minutes for third cross; etc.). After the last procedure, the chart was placed in a drying cabinet for 24 hours at 23°C and 50-55% relative humidity.

The dried chart was visually inspected. The open time is reported as the last time at which the cross had become invisible after the '10 brush movement procedure' (this means that if for instance at t=11.0 minutes the cross remained visible after the '10 brush movement procedure', the open time is 10.0 minutes). The reported open time was the average of the visual assessment by four people. Tests were performed in duplicate.

### Leveling

Leveling is the ability of adjacent paint stripes or brush marks to flow out to a level paint layer. Leveling of the white paints was determined as follows.

A wet paint layer with a thickness of 90 µm was evenly applied on a vertically extended panel of coated tin with a brush at 23 °C and 50-55% relative humidity. The panels were dried at 23 °C and 50-55% relative humidity until there was no further weight loss (usually after 24 hours) and then visually assessed for leveling on a scale from 1 (very poor levelling: deep brush marks visible; less than 25% of the surface area is smooth) to 10 (excellent levelling: no brush marks and 100% smooth surface).

### Film hardness

The Konig hardness of films prepared from the white paints was assessed using the pendulum damping test according to DIN53157. A glass panel was coated with a 90 µm wet film of the white paint and held at 23°C and 50% relative humidity for 7 days. After these 7 days, the hardness was measured at 23 °C and 50% relative humidity with a Konig pendulum. The number of oscillations needed to reduce from an initial deflection of 6° to a deflection of 3° was measured.

### Water resistance

A glass panel was coated with a 150 µm wet film of the white paint using a bar applicator and held at 23°C and 50-55% relative humidity for 7 days. Then water droplets were applied with a pipette on the horizontal dried paint film at four different test spots (four droplets from a pipette at each test spot). Each droplet was covered with a transparent cup to avoid water evaporation. At different time intervals (15 minutes, 30 minutes, 1 hour, 2 hours, 4 hours and 24 hours after application of the water droplet) the water droplet was removed and the paint film at the test spots was visually inspected. After an assessment a water droplet was re-applied at the same spot and removed at the next time interval for the next visual inspection. After the last assessment at 24 hours, the panel was dried for 24 hours and film integrity recovery was assessed. The water-resistance was classed as follows:
1 - bad: macroblisters within 4 hours
2 - poor: macroblisters within 24 hours
3 - reasonable: microblisters within 24 hours; no macroblister after 24 hours
4 - good: no microblisters within 4 hours and no macroblisters after 24 hours
5 - very good: no microblisters and no macroblisters after 24 hours

### Ingredients

### Acrylate binder polymers

The following dispersions of acrylate binder polymers were used:
Acrylate 1: An aqueous dispersion (38 wt % solids) of a non-crosslinking urethane-acrylate hybrid polymer binder in water.
Acrylate 2: An aqueous dispersion (43 wt % solids) of a crosslinking styrene/acrylic binder polymer in water.
Acrylate 3: An aqueous dispersion (50 wt % solids) of a non-crosslinking styrene/acrylic binder polymer in water.
Acrylate 4: NeoPac® E-125 (ex. DSM Coating Resins). An aqueous dispersion (34.5-36.5 wt% solids) of an aliphatic, self-crosslinking urethane-acrylate hybrid polymer binder.
Acrylate 5: NeoCryl® XK-98 (ex. DSM Coating Resins): An aqueous dispersion (43-45 wt% solids) of an anionic pure acrylic copolymer.
Acrylate 6: Alberdingk© AC 3600 (ex. Alberdingk Boley): An aqueous dispersion (40-42 wt% solids) of a multi-phase, self-crosslinking, pure acrylic polymer.

### Alkali soluble acrylic polymers

The following commercially available alkali soluble acrylic polymers were used:
Alkali-soluble acrylic copolymer 1 (ASA 1): Neocryl® BT-24 (ex. DSM Coating Resins): A commercially available alkali-soluble acrylic copolymer emulsion (44-46 wt% solids). Acid value: 73 mg KOH/g polymer.
Alkali-soluble acrylic copolymer 2 (ASA 2):Neocryl® BT-20 (ex. DSM Coating Resins): A commercially available alkali-soluble acrylic copolymer emulsion (39-41 wt% solids). Acid value: 57 mg KOH/g polymer.

### Oxidatively drying resins

The following dispersions of oxidatively drying resins were used:
Alkyd 1: An aqueous dispersion (40 wt% solids) of a PU-modified alkyd with self-stabilizing carboxylic groups. The dispersion is prepared by reacting an isocyanate-functional urethane oligomer with carboxylic groups (prepared by reacting dimethylol propionic acid with diisocyanate) with an alkyd with residual OH-groups.
Alkyd 2: An aqueous dispersion (50 wt% solids) of an alkyd with an oil length of 35% and an acid value of 10 mg KOH/g polymer.
Alkyd 3: Synaqua® 4804 (ex. Arkema): An aqueous dispersion of short oil alkyd; solid content 49-51 wt%.
Alkyd 4: Worleesol® E 150W (ex. Worlée): An aqueous dispersion (38-42 wt% solids) of PU-modified medium oil alkyd.

### Preparation of mill bases

Three different mill bases were prepared by co-milling the following ingredients (all amounts in weight percentages):

**Table 1 - Mill bases**

| | Mill base 1 | Mill base 2 | Mill base 3 |
|---|---|---|---|
| Water | 11.2 | 8.1 | 11.2 |
| Co-solvent (propylene glycol) | 11.0 | 12.3 | 11.0 |
| Dispersant (Orotan 731) | 2.6 | 3.7 | 2.6 |
| Wetting agent | 4.0 | | 4.0 |
| Defoaming agent | 1.3 | 0.7 | 1.3 |
| Neutralizing agent (20.5 wt% ammonium hydroxide solution) | 0.3 | 1.5 | 0.3 |
| TiO₂ | 68.2 | 56.4 | 68.2 |
| Matting agent | 1.5 | | 1.5 |
| Filler (Ca₂CO₃) | | 17.2 | |
| Drier (Borchi ® Oxy-Coat) | | 0.2 | |
| Total | 100 | 100 | 100 |

| | | | |
|---|---|---|---|
| Mill base 3 was made with the same ingredients in the same amounts as mill base 1. | | | |

### Preparation of white paints

White paints were prepared by mixing mill base with dispersions of polymer (acrylate binder polymer with alkali-soluble acrylic polymer and/or oxidatively drying resin) and adding co-solvent, surfactant, wax, water and HEUR thickener (Acrysol RM2020). Tables 2 and 3 show the ingredients used, the final solid concentration of the polymers, and the total solid content in the different paints based on the total weight of the composition. Paints no. 1-3 and 6-7 were prepared with mill base 1; paints no 4 and 5 with mill base 2; and paints 8 to 22 with mill base 3.

### Testing of white paints

Open time and film hardness were determined for all paints. Leveling and water resistance were measured for paints 8 to 22. In Tables 2 and 4, the test results are shown. Paints 20* and 22* are not according to the invention.

**Table 2 - Composition/properties of paints 1-7 prepared with mill bases 1 and 2**

| Paint no. | 1 | 2 | 3 | 4 | 5 | 6 | 7 |
|---|---|---|---|---|---|---|---|
| **Ingredients (all in wt%)** | | | | | | | |
| Mill base 1 | 37.8 | 37.8 | 37.8 | | | 37.8 | 37.8 |
| Mill base 2 | | | | 41.3 | 41.3 | | |
| Acrylate 1 | 31.2 | 25.0 | 17.5 | 30.1 | 18.4 | 19.4 | 11.8 |
| ASA 1 | 9.0 | 10.4 | 7.1 | 12.5 | 7.9 | 3.5 | 7.1 |
| Alkyd 1 | 5.7 | 10.1 | 20.9 | 12.1 | 28.0 | 21.1 | 26.3 |
| Co-solvent | 1.3 | 1.3 | 1.3 | | | 1.3 | 1.3 |
| Surfactant | 0.2 | 0.2 | 0.2 | 0.5 | 0.5 | 0.2 | 0.2 |
| Wax | 2.0 | 2.0 | 2.0 | 0.1 | 0.1 | 2.0 | 2.0 |
| Water | 8.8 | 8.8 | 8.8 | 0.2 | 0.2 | 8.8 | 8.8 |
| Thickener | 4.0 | 4.0 | 4.0 | 3.7 | 3.7 | 4.0 | 4.0 |

| **Solid polymer content and total solid content (all in wt%)** | | | | | | | |
|---|---|---|---|---|---|---|---|
| Solid acrylate | 11.9 | 9.5 | 6.7 | 11.4 | 7.0 | 7.4 | 4.5 |
| Solid alkyd | 2.3 | 4.0 | 8.3 | 4.8 | 11.2 | 9.2 | 10.5 |
| Solid ASA | 4.0 | 4.7 | 3.2 | 5.6 | 3.5 | 1.6 | 3.2 |
| ratio acrylate/al kyd/ASA | 2.9/0.6/1 | 2.0/0.9/1 | 2.1/2.6/1 | 2.0/0.9/1 | 2.0/3.2/1 | 4.7/5.9/1 | 1.4/3.3/1 |
| Binder solids | 18.2 | 18.2 | 18.2 | 21.8 | 21.7 | 18.2 | 18.2 |
| Total solids | 47 | 47 | 47 | 52 | 52 | 47 | 47 |

| **Application and coating properties** | | | | | | | |
|---|---|---|---|---|---|---|---|
| Open time (min.) | 9.5 | 9.5 | 7.5 | 6.8 | 5.8 | 7.0 | 7.3 |
| Film hardness | 22 | 18 | 15 | 20 | 15 | 15 | 13 |

**Table 3 -Ingredients used, weight% of (dry) binder polymers and solids in in paints 8- 22**

| Paint no. | 8 | 9 | 10 | 11 | 12 | 13 | 14 | 15 | 16 | 17 | 18 | 19 | 20 | 21 | 22 |
|---|---|---|---|---|---|---|---|---|---|---|---|---|---|---|---|
| **Ingredients (all in wt%)** | | | | | | | | | | | | | | | |
| Millbase 3 | 37.6 | 37.6 | 37.6 | 37.6 | 37.6 | 37.6 | 37.6 | 36.7 | 37.6 | 37.6 | 37.6 | 37.6 | 37.6 | 37.6 | 37.6 |
| Acrylate 1 | 25.6 | 25.6 | | | | | | 24.9 | 25.6 | 25.6 | 48.4 | 33.9 | 36.6 | | |
| Acrylate 2 | | | | 22.7 | | | | | | | | | | | |
| Acrylate 3 | | | | | 19.5 | | | | | | | | | | |
| Acrylate 4 | | | 27.0 | | | | | | | | | | | | |
| Acrylate 5 | | | | | | 22.1 | | | | | | | | | |
| Acrylate 6 | | | | | | | 23.7 | | | | | | | 31.4 | 33.9 |
| ASA 1 | 10.0 | | 10.0 | 10.0 | 10.0 | 10.0 | 10.0 | 9.7 | 10.0 | 10.0 | | | 10.0 | | 10.0 |
| ASA 2 | | 11.3 | | | | | | | | | | | | | |
| Alkyd 1 | 10.4 | 10.4 | 10.4 | 10.4 | 10.4 | 10.4 | 10.4 | | | | | 13.8 | | 13.8 | |
| Alkyd 2 | | | | | | | | 8.1 | | | | | | | |
| Alkyd 3 | | | | | | | | | 8.3 | | | | | | |
| Alkyd 4 | | | | | | | | | | 10.4 | | | | | |
| Cosolvent | 1.5 | 1.5 | 2.5 | 2.5 | 2.5 | 2.5 | 2.5 | 1.4 | 1.5 | 1.5 | 0.6 | 1.1 | 1.0 | 2.5 | 2.5 |
| Surfactant | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Wax | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| Water | 7.7 | 6.4 | 5.3 | 9.6 | 12.8 | 10.2 | 8.6 | 12.1 | 9.8 | 7.7 | 6.2 | 6.4 | 7.6 | 7.5 | 8.8 |
| Thickener | 5.0 | 5.0 | 5.0 | 5.0 | 5.0 | 5.0 | 5.0 | 4.9 | 5.0 | 5.0 | 5.0 | 5.0 | 5.0 | 5.0 | 5.0 |

| **Solid polymer content and total solid content (all in wt%)** | | | | | | | | | | | | | | | |
|---|---|---|---|---|---|---|---|---|---|---|---|---|---|---|---|
| Acrylate | 9.7 | 9.7 | 9.7 | 9.7 | 9.7 | 9.7 | 9.7 | 9.7 | 9.7 | 9.7 | 18.4 | 12.9 | 13.9 | 12.9 | 13.9 |
| Alkyd | 4.2 | 4.2 | 4.2 | 4.2 | 4.2 | 4.2 | 4.2 | 4.2 | 4.2 | 4.2 | | 5.5 | | 5.5 | |
| AS acrylic | 4.5 | 4.5 | 4.5 | 4.5 | 4.5 | 4.5 | 4.5 | 4.5 | 4.5 | 4.5 | | | 4.5 | | 4.5 |
| Total binder | 18.4 | 18.4 | 18.4 | 18.4 | 18.4 | 18.4 | 18.4 | 18.4 | 18.4 | 18.4 | 18.4 | 18.4 | 18.4 | 18.4 | 18.4 |
| Total solids | 49 | 49 | 49 | 49 | 49 | 49 | 49 | 49 | 49 | 49 | 49 | 49 | 49 | 49 | 49 |

**Table 4 Polymer ratio, total binder polymer and solids contents and properties of paints 8-22**

| Paint | polymer ratio (acrylate/alkyd/ASA) | Total solids (wt%) | Polymer solids (wt%) | Open time (min) | leveling | Film hardness (1 week) | Water resistance |
|---|---|---|---|---|---|---|---|
| 8 (inv.) | 2.2 : 0.9 : 1.0 | 49 | 18.4 | 8.5 | 8.5 | 23 | 3 |
| 9 (inv.) | 2.2 : 0.9 : 1.0 | 49 | 18.4 | 8.8 | 7.0 | 20 | 3 |
| 10 (inv.) | 2.2 : 0.9 : 1.0 | 49 | 18.4 | 8.0 | 7.0 | 18 | 3 |
| 11 (inv.) | 2.2 : 0.9 : 1.0 | 49 | 18.4 | 9.5 | 9.0 | 13 | 5 |
| 12 (inv.) | 2.2 : 0.9 : 1.0 | 49 | 18.4 | 9.0 | 7.5 | 10 | 3 |
| 13 (inv.) | 2.2 : 0.9 : 1.0 | 49 | 18.4 | 9.0 | 7.5 | 11 | 3 |
| 14 (inv.) | 2.2 : 0.9 : 1.0 | 49 | 18.4 | 6.8 | 8.0 | 16 | 4 |
| 15 (inv.) | 2.2 : 0.9 : 1.0 | 49 | 18.4 | 9.8 | 7.5 | 21 | 3 |
| 16 (inv.) | 2.2 : 0.9 : 1.0 | 49 | 18.4 | 8.3 | 7.5 | 18 | 3 |
| 17 (inv.) | 2.2 : 0.9 : 1.0 | 49 | 18.4 | 7.0 | 8.0 | 19 | 3 |
| 18 (comp.) | Acrylate only | 49 | 18.4 | 5.0 | 6.5 | 46 | 1 |
| 19 (comp.) | 2.9 : 1.2 : 0.0 | 49 | 18.4 | 5.8 | 8.0 | 24 | 1 |
| 20 (inv.)* | 3.1 : 0.0 : 1.0 | 49 | 18.4 | 7.0 | 7.0 | 33 | 2 |
| 21 (comp.) | 2.9 : 1.2: 0.0 | 49 | 18.4 | 5.8 | 8.0 | 16 | 3 |
| 22 (inv.) * | 3.1 : 0.0 : 1.0 | 49 | 18.4 | 8.0 | 7.5 | 23 | 2 |

## Claims

1. An aqueous coating composition comprising a dispersed acrylate binder polymer, an alkali-soluble acrylic polymer with a weight averaged molecular weight, as determined according to ISO 16014, of at most 200,000 g/mole and an acid value, determined by ISO 2114, in the range of from 20 to 150 mg KOH/g polymer, and a dispersed oxidatively drying resin, wherein the weight content of the oxidatively drying resin is lower than the weight content of the alkali-soluble acrylic polymer and wherein the weight content of the acrylate binder polymer is higher than the weight content of the alkali-soluble acrylic polymer, wherein the solid content of the coating composition is in the range of from 28 to 55 wt %, and the content of inorganic solid particles is in the range of from 8 to 40 wt %, based on the total weight of the coating composition.

2. An aqueous coating composition according to claim 1, wherein the acrylate binder polymer is a urethane-acrylate hybrid polymer.

3. An aqueous coating composition according to claim 1 or 2, wherein the acrylate binder polymer has a weight averaged molecular weight, as determined according to ISO 16014, of at least 300,000 g/mole, preferably at least 1,000,000 g/mole.

4. An aqueous coating composition according to claim 1 or 2, wherein the alkali-soluble acrylic polymer has a weight averaged molecular weight, as determined according to ISO 16014, in the range of from 8,000 to 100,000 g/mole, preferably of from 10,000 to 60,000 g/mole, more preferably of from 15,000 to 50,000 g/mole.

5. An aqueous coating composition according to any one of the preceding claims, wherein the acid value, determined by ISO 2114, of the alkali-soluble acrylic polymer is in the range of from 30 to 100 mg KOH/g polymer, preferably in the range of from 40 to 80 mg KOH/g polymer, more preferably in the range of from 55 to 75 mg KOH/g polymer.

6. An aqueous coating composition according to any one of the preceding claims, wherein the composition comprises in the range of from 2 to 8 wt% of alkali-soluble acrylic polymer, preferably of from 3 to 7 wt%, based on the total weight of the coating composition.

7. An aqueous coating composition according to any one of the preceding claims, wherein the oxidatively drying resin comprises an alkyd, preferably is an alkyd.

8. An aqueous coating composition according to claim 7, wherein the alkyd is a urethane-modified alkyd.

9. An aqueous coating composition according to any one of the preceding claims, wherein the weight content of the acrylate binder polymer is higher than the combined weight contents of the oxidatively drying resin and the alkali-soluble acrylic polymer.

10. An aqueous coating composition according to any one of the preceding claims, wherein the weight ratio of acrylate binder polymer to oxidatively drying resin is in the range of from 1.5:1 to 7:1.

11. An aqueous coating composition according to any one of the preceding claims, wherein the combined contents of acrylate binder polymer, alkali-soluble acrylic polymer, oxidatively drying resin and any further binder polymer is in the range of from 12 to 30 wt %, preferably of from 15 to 25 wt %, based on the total weight of the coating composition.

12. An aqueous coating composition according to any one of the preceding claims, wherein the solid content of the coating composition is in the range of from 40 to 50 wt % based on the total weight of the coating composition.

13. An aqueous coating composition according to any one of the preceding claims, wherein the content of inorganic solid particles is in the range of from 10 to 35 wt %, based on the total weight of the coating composition.

14. An aqueous coating composition according to any one of the preceding claims further comprising a hydrophobically modified ethoxylate urethane (HEUR) thickener.

## Patentansprüche

1. Wässrige Beschichtungszusammensetzung, umfassend ein dispergiertes Acrylat-Bindemittelpolymer, ein alkalilösliches Acrylpolymer mit einem gewichtsmittleren Molekulargewicht gemäß Bestimmung nach ISO 16014 von höchstens 200.000 g/mol und einer nach ISO 2114 bestimmten Säurezahl im Bereich von 20 bis 150 mg KOH/g Polymer und ein dispergiertes oxidativ trocknendes Harz,
wobei der Gewichtsgehalt des oxidativ trocknenden Harzes niedriger ist als der Gewichtsgehalt des alkalilöslichen Acrylpolymers und wobei der Gewichtsgehalt des Acrylat-Bindemittelpolymers höher ist als der Gewichtsgehalt des alkalilöslichen Acrylpolymers,
wobei der Feststoffgehalt der Beschichtungszusammensetzung im Bereich von 28 bis 55 Gew.-% liegt und der Gehalt an anorganischen festen Teilchen im Bereich von 8 bis 40 Gew.-%, bezogen auf das Gesamtgewicht der Beschichtungszusammensetzung, liegt.

2. Wässrige Beschichtungszusammensetzung nach Anspruch 1, wobei es sich bei dem Acrylat-Bindemittelpolymer um ein Urethan-Acrylat-Hybridpolymer handelt.

3. Wässrige Beschichtungszusammensetzung nach Anspruch 1 oder 2, wobei das Acrylat-Bindemittelpolymer ein gewichtsmittleres Molekulargewicht gemäß Bestimmung nach ISO 16014 von mindestens 300.000 g/mol, vorzugsweise mindestens 1.000.000 g/mol, aufweist.

4. Wässrige Beschichtungszusammensetzung nach Anspruch 1 oder 2, wobei das alkalilösliche Acrylpolymer ein gewichtsmittleres Molekulargewicht gemäß Bestimmung nach ISO 16014 im Bereich von 8000 bis 100.000 g/mol, vorzugsweise von 10.000 bis 60.000 g/mol, weiter bevorzugt von 15.000 bis 50.000 g/mol, aufweist.

5. Wässrige Beschichtungszusammensetzung nach einem der vorhergehenden Ansprüche, wobei die nach ISO 2114 bestimmte Säurezahl des alkalilöslichen Acrylpolymers im Bereich von 30 bis 100 mg KOH/g Polymer, vorzugsweise im Bereich von 40 bis 80 mg KOH/g Polymer, weiter bevorzugt im Bereich von 55 bis 75 mg KOH/g Polymer, liegt.

6. Wässrige Beschichtungszusammensetzung nach einem der vorhergehenden Ansprüche, wobei die Zusammensetzung im Bereich von 2 bis 8 Gew.-% alkalilösliches Acrylpolymer, vorzugsweise von 3 bis 7 Gew.-%, bezogen auf das Gesamtgewicht der Beschichtungszusammensetzung, umfasst.

7. Wässrige Beschichtungszusammensetzung nach einem der vorhergehenden Ansprüche, wobei das oxidativ trocknende Harz ein Alkyd umfasst und vorzugsweise ein Alkyd ist.

8. Wässrige Beschichtungszusammensetzung nach Anspruch 7, wobei es sich bei dem Alkyd um ein urethanmodifiziertes Alkyd handelt.

9. Wässrige Beschichtungszusammensetzung nach einem der vorhergehenden Ansprüche, wobei der Gewichtsgehalt des Acrylat-Bindemittelpolymers höher ist als die kombinierten Gewichtsgehalte des oxidativ trocknenden Harzes und des alkalilöslichen Acrylpolymers.

10. Wässrige Beschichtungszusammensetzung nach einem der vorhergehenden Ansprüche, wobei das Gewichtsverhältnis von Acrylat-Bindemittelpolymer zu oxidativ trocknendem Harz im Bereich von 1,5:1 bis 7:1 liegt.

11. Wässrige Beschichtungszusammensetzung nach einem der vorhergehenden Ansprüche, wobei die kombinierten Gehalte von Acrylat-Bindemittelpolymer, alkalilöslichem Acrylpolymer, oxidativ trocknendem Harz und jeglichem weiteren Bindemittelpolymer im Bereich von 12 bis 30 Gew.-%, vorzugsweise von 15 bis 25 Gew.-%, bezogen auf das Gesamtgewicht der Beschichtungszusammensetzung, liegen.

12. Wässrige Beschichtungszusammensetzung nach einem der vorhergehenden Ansprüche, wobei der Feststoffgehalt der Beschichtungszusammensetzung im Bereich von 40 bis 50 Gew.-%, bezogen auf das Gesamtgewicht der Beschichtungszusammensetzung, liegt.

13. Wässrige Beschichtungszusammensetzung nach einem der vorhergehenden Ansprüche, wobei der Gehalt an anorganischen festen Teilchen im Bereich von 10 bis 35 Gew.-%, bezogen auf das Gesamtgewicht der Beschichtungszusammensetzung, liegt.

14. Wässrige Beschichtungszusammensetzung nach einem der vorhergehenden Ansprüche, ferner umfassend ein hydrophob modifiziertes Ethoxylaturethan (HEUR) als Verdicker.

## Revendications

1. Composition aqueuse de revêtement comprenant un polymère liant d'acrylate dispersé, un polymère acrylique soluble dans un alcali doté d'un poids moléculaire moyen en poids, tel que déterminé selon la norme ISO 16014,
d'au plus 200 000 g/mole et un indice d'acide, déterminé par la norme ISO 2114, dans la plage allant de 20 à 150 mg de KOH/g de polymère, et une résine séchant par oxydation dispersée,
la teneur en poids de la résine séchant par oxydation étant inférieure à la teneur en poids du polymère acrylique soluble dans un alcali et la teneur en poids du polymère liant d'acrylate étant supérieure à la teneur en poids du polymère acrylique soluble dans un alcali,
la teneur en solides de la composition de revêtement se situant dans la plage allant de 28 à 55 % en poids, et la teneur en particules solides inorganiques se situant dans la plage allant de 8 à 40 % en poids, sur la base du poids total de la composition de revêtement.

2. Composition aqueuse de revêtement selon la revendication 1, le polymère liant d'acrylate étant un polymère hybride uréthane-acrylate.

3. Composition aqueuse de revêtement selon la revendication 1 ou 2, le polymère liant d'acrylate possédant un poids moléculaire moyen en poids, tel que déterminé selon la norme ISO 16014, d'au moins 300 000 g/mole, préférablement d'au moins 1 000 000 g/mole.

4. Composition aqueuse de revêtement selon la revendication 1 ou 2, le polymère acrylique soluble dans un alcali possédant un poids moléculaire moyen en poids, tel que déterminé selon la norme ISO 16014, dans la plage allant de 8 000 à 100 000 g/mole, préférablement allant de 10 000 à 60 000 g/mole, plus préférablement allant de 15 000 à 50 000 g/mole.

5. Composition aqueuse de revêtement selon l'une quelconque des revendications précédentes, l'indice d'acide, déterminé par la norme ISO 2114,
du polymère acrylique soluble dans un alcali se situant dans la plage allant de 30 à 100 mg de KOH/g de polymère, préférablement dans la plage allant de 40 à 80 mg de KOH/g de polymère, plus préférablement dans la plage allant de 55 à 75 mg de KOH/g de polymère.

6. Composition aqueuse de revêtement selon l'une quelconque des revendications précédentes, la composition comprenant dans la plage allant de 2 à 8 % en poids de polymère acrylique soluble dans un alcali, préférablement allant de 3 à 7 % en poids, sur la base du poids total de la composition de revêtement.

7. Composition aqueuse de revêtement selon l'une quelconque des revendications précédentes, la résine séchant par oxydation comprenant un alkyde, préférablement étant un alkyde.

8. Composition aqueuse de revêtement selon la revendication 7, l'alkyde étant un alkyde modifié par uréthane.

9. Composition aqueuse de revêtement selon l'une quelconque des revendications précédentes, la teneur en poids du polymère liant d'acrylate étant supérieure aux teneurs en poids combinées de la résine séchant par oxydation et du polymère acrylique soluble dans un alcali.

10. Composition aqueuse de revêtement selon l'une quelconque des revendications précédentes, le rapport en poids de polymère liant d'acrylate à résine séchant par oxydation se situant dans la plage allant de 1,5:1 à 7:1.

11. Composition aqueuse de revêtement selon l'une quelconque des revendications précédentes, les teneurs combinées de polymère liant d'acrylate, de polymère acrylique soluble dans un alcali, de résine séchant par oxydation et d'un quelconque polymère liant supplémentaire se situant dans la plage allant de 12 à 30 % en poids, préférablement allant de 15 à 25 % en poids, sur la base du poids total de la composition de revêtement.

12. Composition aqueuse de revêtement selon l'une quelconque des revendications précédentes, la teneur en solides de la composition de revêtement se situant dans la plage allant de 40 à 50 % en poids sur la base du poids total de la composition de revêtement.

13. Composition aqueuse de revêtement selon l'une quelconque des revendications précédentes, la teneur en particules solides inorganiques se situant dans la plage allant de 10 à 35 % en poids, sur la base du poids total de la composition de revêtement.

14. Composition aqueuse de revêtement selon l'une quelconque des revendications précédentes comprenant en outre un agent épaississant de type éthoxylate-uréthane modifié de manière hydrophobe (HEUR).
